# EUROPEAN PATENT APPLICATION

(11) **EP 4 832 124 A1**
(43) Date of publication of application: **28.10.2026**
(21) Application number: 25171946.4
(22) Date of filing: 23.04.2025
(51) Int. Cl.: H01M 8/18, H01M 8/04082, H01M 8/04186, H01M 8/04276

(54) **PASSIVE INTERTANK VOLUME AND CHARGE REBALANCING SYSTEM FOR REDOX FLOW BATTERY**

(71) Applicant: ESS Tech, Inc., Wilsonville, Oregon 97070 (US)
(72) Inventor: Alper, John, 80797 Munich (DE)
(74) Representative: Grünecker Patent- und Rechtsanwälte PartG mbB

(57) **Abstract**

The invention provides a rebalancing system for a redox flow battery, comprising a positive tank for containing positive electrolyte; a negative tank for containing negative electrolyte; and a rebalancing intertank reactor having an electrolyte zone and a hydrogen zone; wherein the electrolyte zone and the hydrogen zone are separated from each other by an ion conductive membrane or separator to provide a reduction reaction of positive electrolyte in the electrolyte zone and an oxidation reaction of hydrogen gas in the hydrogen zone; wherein the electrolyte zone is directly connected between the positive tank and the negative tank and the hydrogen zone is directly connected to a headspace of the negative tank configured to contain hydrogen gas; and wherein the geometric arrangement of the positive tank, the rebalancing intertank reactor and the negative tank is configured to allow positive electrolyte to flow from the positive tank through the electrolyte zone to the negative tank due to a hydraulic head difference between the positive electrolyte and the negative electrolyte..

## Description

### Field of the Invention

The invention relates to a rebalancing system for a redox flow battery and a corresponding redox flow battery.

### Prior Art

Redox flow batteries employing iron in both half-cells are attractive for large-scale energy storage. However, aqueous iron systems often experience unwanted hydrogen evolution at the negative electrode (e.g., when the local potential is below the H₂ evolution threshold).

Iron salt batteries (ISBs) are redox flow batteries that utilize iron salts as electrolytes. The electrochemical reactions during charge include:

(1) Fe²⁺ + 2e⁻ → Fe° E° = -0.44 V (negative half-cell, main energy storage reaction)

(2) 2Fe²⁺ → 2Fe³⁺ + 2e⁻ E° = 0.77 V (positive half-cell, main energy storage reaction)

Unwanted side reactions in the negative half-cell include:

(3) 2H⁺ + 2e⁻ → H₂ E° = 0 V

(4) 2H⁺ + Fe° → H₂ + Fe²⁺

During discharge, reactions (1) and (2) reverse, while reaction (4) can continue. These unwanted hydrogen evolution reactions increase the pH in the negative electrolyte and lead to challenges such as:
- pH drifts in both positive and negative electrolytes, impacting the stability of Fe²⁺ and Fe³⁺ species.
- Precipitation of Fe³⁺ species on the separator due to Fe³⁺ species diffusion through the half cell barrier, and the elevated pH in the negative half-cell, increasing cell resistance and eventually causing cell failure if not periodically refreshed.
- Charge Imbalance: hydrogen evolution occurs at the negative electrode during charging, diverting electrons away from Fe plating and thus "overcharging" the positive tank. Overproduction of Fe³⁺ in the positive tank, effectively "overcharging" that electrolyte. This leads to loss effective capacity.
- Volume Imbalance: Transfer of fluid between the tanks due to electro-osmotic effects and minor pressure differences within the stack of battery cells. During charging this results in net transfer of negative electrolyte volume to the positive side half cells. If left unchecked, this leads to potential tank overflow and system failure.

Directly transferring electrolyte from the positive to the negative tanks however, is not possible, as the positive electrolyte (enriched in Fe³⁺) is not stable in the typical operating condition of the negative electrolyte tank (pH ~2-4).

In prior-art systems (such as in WO 2023/222306 A1) this imbalance is corrected by pumping positive electrolyte into a third vessel, discharging it in a dedicated reactor (referred to as a "third tank" design), and then returning it to the negative tank. This approach typically requires additional pumps, flow sensors, valves, and control circuitry to ensure Fe³⁺ is fully reduced before mixing with the negative electrolyte.

However, the additional pumps, valves, or complex sensor loops, imply significant costs and impaired reliability.

### Description of the Invention

It is the object of the present invention to overcome or alleviate at least some of the above mentioned disadvantages.

The present invention provides a rebalancing system for a redox flow battery, comprising a positive tank for containing positive electrolyte; a negative tank for containing negative electrolyte; and a rebalancing intertank reactor having an electrolyte zone and a hydrogen zone; wherein the electrolyte zone and the hydrogen zone are separated from each other by an ion conductive membrane or separator to provide a reduction reaction of positive electrolyte in the electrolyte zone and an oxidation reaction of hydrogen gas in the hydrogen zone; wherein the electrolyte zone is directly connected between the positive tank and the negative tank and the hydrogen zone is directly connected to a headspace of the negative tank configured to contain hydrogen gas; and wherein the geometric arrangement of the positive tank, the rebalancing intertank reactor and the negative tank is configured to allow positive electrolyte to flow from the positive tank through the electrolyte zone to the negative tank due to a hydraulic head difference between the positive electrolyte and the negative electrolyte.

This can be developed in that the rebalancing system may be configured to circulate hydrogen gas from the headspace of the negative tank via the hydrogen zone back to the headspace of the negative tank.

In a further development, the rebalancing intertank reactor may be configured to transport protons from the hydrogen zone to the electrolyte zone through the ion conductive membrane or separator, and to transport electrons from the hydrogen zone to the electrolyte zone to reduce positive electrolyte ions in the electrolyte zone.

In another development, the rebalancing intertank reactor may be configured to transfer reacted electrolyte from the positive tank to the negative tank, in particular to transfer iron electrolyte having Fe³⁺ reduced to iron Fe²⁺.

According to a further development, the rebalancing intertank reactor may comprise a catalyst in the hydrogen zone to allow or enhance the reaction H₂ → 2H⁺ +2e⁻.

According to another development, the rebalancing intertank reactor may comprise an electrochemical rod reactor including a proton conductive membrane that physically separates hydrogen gas in the hydrogen zone at an inside or outside of the rod reactor from Fe³⁺-rich positive electrolyte in the electrolyte zone at an outside or inside of the rod reactor, respectively, allowing spontaneous hydrogen oxidation in the hydrogen zone and Fe³⁺ reduction in the electrolyte zone, wherein the electrochemical rod reactor is configured to strictly separate the positive electrolyte from the hydrogen zone and the hydrogen gas from the electrolyte zone.

This can be developed in that a rod geometry, such as length, diameter, membrane area, may be sized to assure sufficient residence time for near-complete Fe³⁺ reduction during peak flow. The peak flow being the maximum flow of the electrolyte from the positive tank through the electrolyte zone to the negative tank.

In another development, the rebalancing intertank reactor may comprise a shell-and-tube rod reactor arrangement having multiple similar electrochemical rod reactors, the arrangement comprising a shell allowing hydrogen gas to contact only the hydrogen zones of the electrochemical rod reactors, and tubes allowing the positive electrolyte to contact only the electrolyte zones of the electrochemical rod reactors.

Alternatively, the rebalancing intertank reactor comprises a shell-and-tube rod reactor arrangement having multiple similar electrochemical rod reactors, the arrangement comprising tubes allowing hydrogen gas to contact only the hydrogen zones of the electrochemical rod reactors, and a shell allowing the positive electrolyte to contact only the electrolyte zones of the electrochemical rod reactors.

The rod/rods may be angled upwards in a direction from the positive tank to the negative tank.

According to another development, the rebalancing intertank reactor comprises a fuel cell type reactor in which the ion conductive membrane or separator divides hydrogen in the hydrogen zone from Fe³⁺-rich positive electrolyte in the electrolyte zone.

This may be developed in that the fuel cell type reactor is oriented such that flow from the positive tank naturally enters the electrolyte side of the membrane under gravity or minor head pressure, while hydrogen from the negative tank headspace or from a recirculation line contacts the hydrogen zone, and after passing through the electrolyte zone, Fe²⁺-rich electrolyte flows out to the negative tank.

According to another development, the rebalancing intertank reactor may further comprising a tube for transporting negative electrolyte from the negative tank to the positive tank.

The invention further provides a redox flow battery comprising the rebalancing system according to the invention or any one of the above-described developments.

Further features and exemplary embodiments as well as advantages of the present invention will be explained in greater detail hereinafter with reference to the drawings. It is understood that the specific embodiments do not limit the present invention, and the full scope of the present invention is defined by the claims.

### Brief Description of the Drawings

- Fig. 1: shows a first embodiment of rebalancing system for a redox flow battery.
- Fig. 2: shows a second embodiment of a rebalancing system for a redox flow battery.
- Fig. 3: shows a detail of the inter-tank electrochemical rebalancing reactor according to the second embodiment, specifically of the electrolyte and hydrogen zones.
- Fig. 4: shows further details of the inter-tank electrochemical rebalancing reactor according to the second embodiment including cross sections of a single rod.
- Fig. 5: shows further details of the inter-tank electrochemical rebalancing reactor according to the second embodiment including a bundle of rods.
- Fig. 6: shows a third embodiment of a rebalancing system for a redox flow battery.
- Fig. 7: shows reactions in the fuel cell of the rebalancing system in the third embodiment.
- Fig. 8: shows a redox flow battery comprising the rebalancing system according to the invention or one of the developments thereof.

### Detailed Description of the Invention

In the present invention it is intended to overcome the operational challenges and complications described above in the prior art section.

This invention relates to an inter-tank electrochemical rebalancing reactor for use in aqueous iron redox flow batteries (and related systems). The core idea is to place a reactor directly between the positive and negative electrolyte tanks so that electrolyte can be transferred and reacted passively based solely on hydraulic head differences. Two primary reactor embodiments are disclosed:
1. A shell-and-tube rod reactor arrangement, featuring multiple electrochemical "rod reactors" in a tube or pipe (the "shell"). The rods each include an ion-selective membrane that physically separates a hydrogen-rich zone (inside the rod) from the Fe³⁺-rich electrolyte (outside), allowing spontaneous hydrogen oxidation and Fe³⁺ reduction.
2. A fuel cell embodiment in which a membrane or separator divides a hydrogen side from an iron-electrolyte side. Because it operates in-line between the tanks (rather than being stacked for voltage generation), its primary function is to drive the rebalancing reactions in a simple, robust manner.

This novel physical arrangement eliminates the need for additional pumps, valves, or complex sensor loops, significantly reducing cost and improving reliability. Both designs are sized based on battery operation conditions (product specifications) to transfer only completely reacted electrolyte from the positive to the negative tanks.

Prior publications have not disclosed employing such rod or single-cell Fe³⁺- H₂ fuel cell reactors in a passive, direct intertank arrangement for volume and charge rebalancing. The invention herein addresses that unmet need, eliminating many complexities and lowering overall system cost.

The present invention addresses that gap by carefully arranging rod or membrane-based reactors directly between the two tanks, using only the hydraulic head difference for fluid movement. The sizing of the reactors is performed in such a way as to ensure completion of reaction prior to electrolyte transfer. A second volume transfer element may be incorporated to assist in the electrolyte transfer from the negative to the positive tank, as a simple angled tube/pipe, as the negative electrolyte is stable when added to the positive electrolyte.

### Core Concept: Passive Intertank Reactor

The reactor is placed so that overcharged (Fe³⁺-rich) electrolyte from the positive tank flows into the reactor purely by gravity or a minimal level/pressure gradient. At the same time, hydrogen gas from the negative tank-or its headspace-contacts the reactor's interior. Within this device, the following half-reactions occur:
- Hydrogen oxidation (anode zone): H₂ → 2H⁺ + 2e⁻
- Iron reduction (cathode zone): Fe³⁺ + e⁻ → Fe²⁺

The net reaction rebalances the electrolyte: Fe³⁺ + ½H₂ → Fe²⁺ + H⁺

Once reduced, the Fe²⁺-rich solution exits the reactor directly into the negative tank. Thus, both charge and volume imbalances are passively corrected without dedicated pumps or extensive controls.

### Shell-and-Tube Rod Reactor Embodiment

In one embodiment, the invention employs a tube or pipe ("shell") housing multiple electrochemical rod reactors. Each rod typically comprises:
1. Shell Porous Electrode (Hydrogen Side)
   ∘ A shell or cavity for hydrogen gas.
   ∘ Porous, conductive material (e.g., carbon felt, graphite, metal foam) that promotes hydrogen oxidation and transfers electrons.
   ∘ Hydrogen oxidation catalysts in contact with the ion selective membrane.
2. Ion-Selective Membrane
   ∘ A cylindrical membrane wraps the inner electrode, allowing ionic transport (e.g., protons) while physically separating hydrogen from the iron-bearing fluid.
   ∘ This barrier prevents catalyst poisoning and keeps the fluids distinct.
3. Tube Porous Electrode (Iron Side)
   ∘ Fe³⁺-rich electrolyte flows around or across this outer electrode.
   ∘ Fe³⁺ is electrochemically reduced to Fe²⁺, with electrons conducted from the inner electrode via a conductive cap or bridging element.
4. Mechanical Caps and Housing
   ∘ The reactor is sealed by an electrically conductive top/bottom cap that ensures a stable mechanical structure and an electron path between the inner and outer electrodes.
   ∘ The rods are affixed in parallel in the tube or pipe such that overcharged electrolyte can pass around them. The rod geometry (length, diameter, membrane area, etc.) is sized to assure sufficient residence time for near-complete Fe³⁺ reduction during peak flow.

This arrangement is modular: if one rod fails, the others continue operating. The design requires no large external electrical bus or complex series connections, making it robust and easy to scale.

### Fuel Cell Embodiment

Alternatively, a fuel cell arrangement can be adopted, though here it is deployed not to generate net electrical power for an external load, but purely to re-equilibrate the electrolytes. This embodiment generally includes:
- An lon-Conductive Membrane or Separator that physically divides:
   ∘ A hydrogen side (in fluid or vapor contact with H₂ from the negative tank),
   ∘ An iron-electrolyte side (in contact with Fe³⁺ solution from the positive tank).
- Catalytic Surfaces can be applied on either side of the membrane (or on porous diffusion layers adjacent to it) to facilitate hydrogen oxidation and Fe³⁺ reduction.

Like the rod reactor approach, the fuel cell is oriented such that flow from the positive tank naturally enters the iron side of the membrane under gravity or minor head pressure. After passing through the reaction zone, the now Fe²⁺-rich electrolyte flows out to the negative tank. Meanwhile, hydrogen from the negative tank headspace (or a simple recirculation line) contacts the anode side.

Such operation of the fuel cell will create a potential between the electrolyte side and the hydrogen side. There may be provided an internal shunt resistor designed to create an upper cut-off current of 200-1000 mA/cm² at the operating potential.

By avoiding any complex electrical "stack" or series connection, this device remains functionally simple. It leverages the same principle of passive fluid transfer and in situ electrochemical rebalancing.

### Novel Physical Arrangement and Key Advantages

A major inventive step is how these reactors-whether rod-style or fuel-cell style-are physically integrated between the positive and negative tanks to accomplish volume/charge rebalancing without external pumping:
1. Direct Tank-to-Tank Flow Path: Fluid from the overfilled/overcharged tank automatically enters the reactor. Once rebalanced, it continues into the opposite tank, correcting both volume and redox state.
2. Open Gas Communication: The reactor's hydrogen side is in direct fluid or vapor communication with the negative tank's headspace, ensuring a ready supply of H₂.
3. Passive Operation: The arrangement exploits hydraulic head differences. No additional pumps, multi-loop piping, or intricate valve sequences are required. A pump to move H₂ through the system may be used to improve performance, operated continuously.
4. Membrane Separation: Important for preventing direct contact between the hydrogen catalyst and Fe³⁺ solution, thus reducing corrosion and poisoning while ensuring high reaction efficiency.
5. Robustness and Scalability: Each rod or fuel cell module is autonomously functional, and the entire system can be sized by adding more rods or adjusting the membrane area. A single rod/cell malfunction does not shut down the entire rebalancing function.

Compared to prior art that leverages third tanks or separate rebalancing loops, this direct intertank reactor design is far simpler, more cost-effective, and inherently more reliable. Indeed, it is precisely the physical arrangement of these components-coupled with the passively driven fluid path-that provides significant practical benefits.

A second volume transfer element may be incorporated to assist in the electrolyte transfer from the negative to the positive tank, as a simple angled tube/pipe, as the negative electrolyte is stable when added to the positive electrolyte.

### Detailed Description of the Drawings

The invention is further described in detail for the following embodiments with respect to the accompanying drawings.

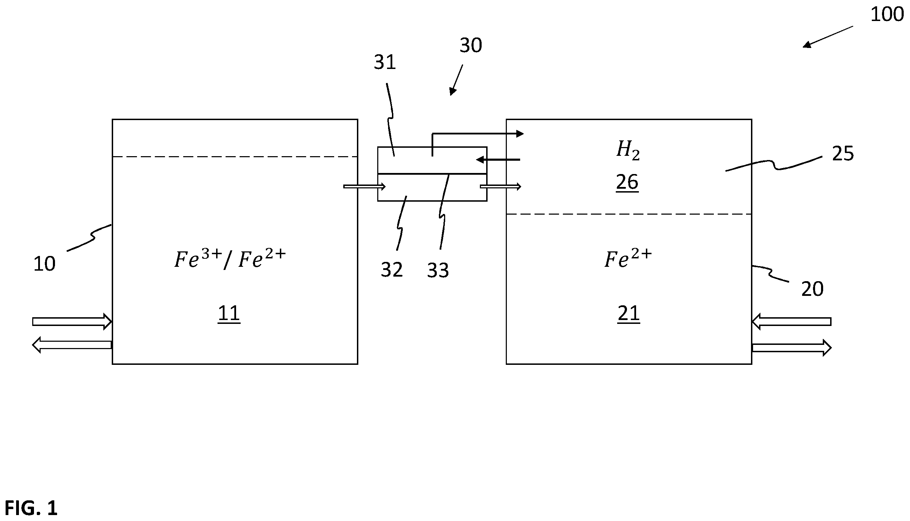

Figure 1 shows a first embodiment of rebalancing system for a redox flow battery.

It illustrates the general concept of the rebalancing system 100 for a redox flow battery according to the present invention. The rebalancing system 100 comprising a positive tank 10 for containing positive electrolyte 11; a negative tank 20 for containing negative electrolyte 21; and a rebalancing intertank reactor 30 having an electrolyte zone 32 and a hydrogen zone 31; wherein the electrolyte zone 32 and the hydrogen zone 31 are separated from each other by an ion conductive membrane or separator 33 to provide a reduction reaction of positive electrolyte in the electrolyte zone 32 and an oxidation reaction of hydrogen gas in the hydrogen zone 31; wherein the electrolyte zone 32 is directly connected between the positive tank 10 and the negative tank 20 and the hydrogen zone is directly connected to a headspace 25 of the negative tank 20 configured to contain hydrogen gas 26; and wherein the geometric arrangement of the positive tank 10, the rebalancing intertank reactor 30 and the negative tank 20 is configured to allow positive electrolyte 11 to flow from the positive tank 10 through the electrolyte zone 32 to the negative tank 20 due to a hydraulic head difference between the positive electrolyte and the negative electrolyte.

Positive electrolyte 11 comprising Fe³⁺ and Fe²⁺ is circulated from a positive side of a battery cell to the positive tank 10 and back to the positive side of the battery cell. Negative electrolyte 21 comprising Fe²⁺ and H₂ is circulated from the negative side of the battery cell to the negative tank 20, while negative electrolyte comprising Fe²⁺ (without hydrogen or with a reduced amount of hydrogen) is transferred back to the negative side of the battery cell, since the H₂ gas accumulates in the headspace 25 of the negative tank 20.

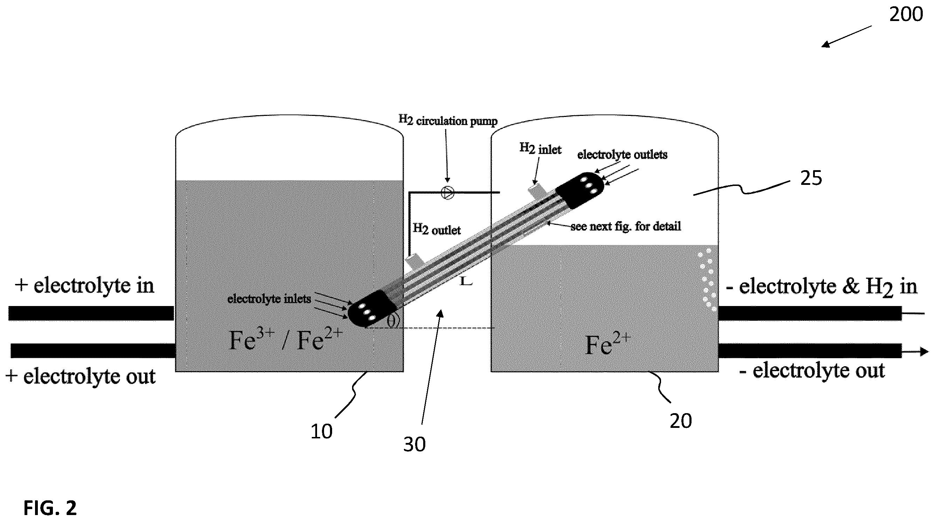

Fig. 2 shows a second embodiment of a rebalancing system for a redox flow battery.

This second embodiment 200 comprises a bundle of electrochemical rod reactors as the rebalancing intertank reactor 30. The plurality of electrochemical rod reactors 30 includes similar electrochemical rod reactors that are enclosed in a shell-and-tube(s) arrangement such that the positive electrolyte contacts only the outer part of each electrochemical rod reactor and the hydrogen gas contacts only the inner part of each electrochemical rod reactor. Thereby the positive electrolyte and the hydrogen gas are strictly separated from each other. As a consequence, the electrolyte cannot poison any catalyst at the hydrogen side of the membrane.

In other words, each plurality of electrochemical rod reactors comprises a sealing structure separating the flow of the positive electrolyte and the flow of the hydrogen from each other and allow them to flow in separate fluid conduits past the inner and outer surfaces of the ionic exchange membrane of each electrochemical rod reactor in the arrangement, respectively.

The flow of hydrogen gas may be enhanced by a pump circulating the H2 gas from the headspace 25 to the hydrogen zone 32 of the plurality of electrochemical rod reactors 30 and back to the headspace 25.

The plurality of electrochemical rod reactors 30 (shell-and-tube rod reactor arrangement 30) has a length L and is inclined upwards at an angle θ (as seen in the flow direction of the electrolyte). This allows adjustment of the residence time of the electrolyte within the electrolyte zone, in particular during expected peak transfer times, by a choosing respective values for L and θ.

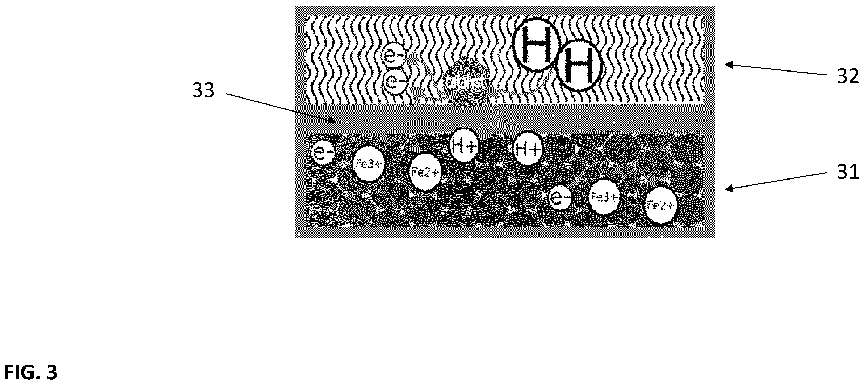

The concept of the electrochemical rod reactors is further described with reference to Figures 3 to 5 below.

Fig. 3 shows an enlarged detail of the inter-tank electrochemical rebalancing reactor according to the second embodiment, specifically of the electrolyte and hydrogen zones, as indicated in Fig. 2.

This shows an example embodiment of the electrochemical rod reactor performing Fe³⁺ reduction to Fe²⁺ in the outer fluid and hydrogen oxidation (H₂ to 2H⁺) in the inner fluid. The zoom-in shows the hydrogen gas H₂ reacting on the catalyst surface and the H⁺ ions transferring through the ion exchange membrane, while the electrons (e⁻) travel through the inner carbon material.

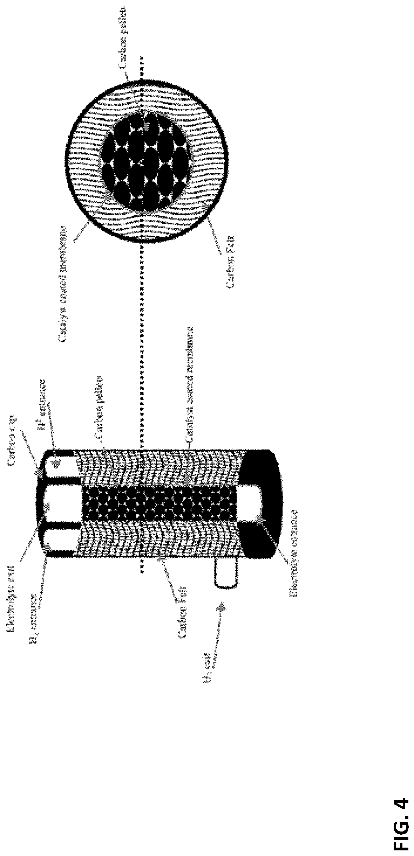

Fig. 4 shows further details of the inter-tank electrochemical rebalancing reactor according to the second embodiment including cross sections of a single electrochemical rod reactor. The example embodiment of the electrochemical rod reactor is illustrated in face on and top down cross sections.

The electrochemical rod reactor comprises a first porous electrode material at an inside of the electrochemical rod reactor and a second porous electrode material at an outside of the electrochemical rod reactor; and an ionic exchange membrane separating the first and the second porous electrode material.

The first porous electrode material is generally configured to allow a first fluid (here hydrogen gas) to contact the ionic exchange membrane at an inner surface of the ionic exchange membrane and the second porous electrode material is configured to allow a second fluid (here positive electrolyte) to contact the ionic exchange membrane at an outer surface of the ionic exchange membrane, wherein the first and second porous electrode materials are electrically conductive.

The left side of Fig. 4 shows the electrochemical rod reactor in a partially vertical cross section, while the right side shows a horizontal cross section.

The first porous electrode material is in contact with the inner surface of the ionic exchange membrane and the second porous electrode material is in contact with the outer surface of the ionic exchange membrane. The ionic exchange membrane allows a spontaneous electrochemical reaction between a first reactant in the first fluid and a second reactant in the second fluid across the ionic exchange membrane, without any external voltage applied between the first and the second porous electrode materials.

The first and the second porous electrode materials are carbon based, for example carbon, graphite fibers, felts, papers, fabrics, or composites with polymer, or the first and/or the second porous electrode material may be metallic based, in particular metal foams. The first porous electrode material is inert in the first fluid and the second porous electrode material is inert in the second fluid. The first and second fluids may be positive electrolyte and hydrogen gas, respectively, or vice versa.

The electrochemical rod reactor further comprises a catalyst in contact with the inside or the outside or both sides or neither side of the ionic exchange membrane, in this example on the inside.

The first and the second porous electrode materials are in mutual electrical contact through a conductive cap (carbon cap) at one end (here the upper end) of the electrochemical rod reactor. The conductive cap has an opening in order to allow access of the first fluid to the first porous electrode material. The conductive cap comprises an electrically conductive material, such as graphite or one or more metals. The conductive cap may be provided at both ends of the rod reactor.

Specifically, the electrochemical rod reactor performs Fe³⁺ reduction to Fe²⁺ in the outer part and hydrogen oxidation (H₂ to 2H⁺) in the inner part. The zoom-in of Figure 3 shows the hydrogen gas H₂ reacting on a catalyst surface and the H⁺ ions transferring through the ion exchange membrane, while the electrons (e⁻) travel through the inner carbon material, for example via the conductive cap(s).

There is no direct contact between the inner and the outer fluids nor between the inner fluid and outer surface or between the outer fluid and the inner surface. In particular, the electrochemical rod reactor(s) comprise a sealing structure strictly separating the flows of the hydrogen gas and the positive electrolyte from each other.

Such an electrochemical rod reactor is described in greater detail in European patent application No. 24 206 925.0.

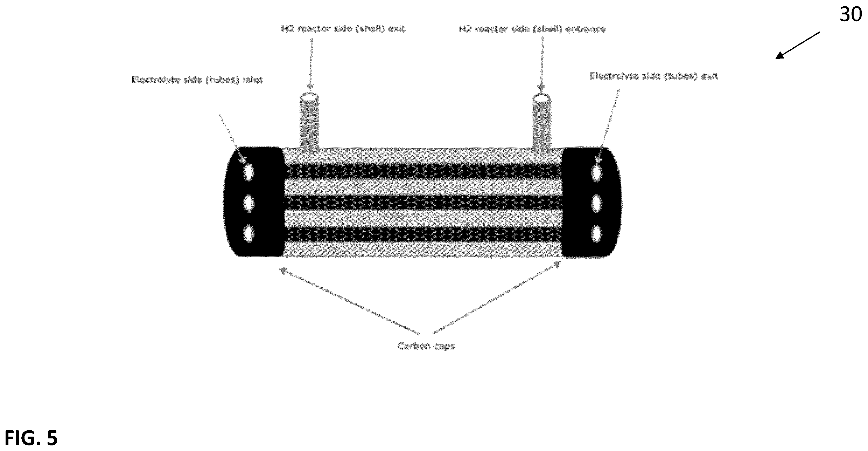

Fig. 5 shows further details of the inter-tank electrochemical rebalancing reactor according to the second embodiment including a bundle of rods.

Here, the rebalancing intertank reactor comprises a shell-and-tube rod reactor arrangement having multiple similar electrochemical rod reactors, the arrangement comprising a shell allowing hydrogen gas to contact only the hydrogen zones of the electrochemical rod reactors (the hydrogen zones being on the outside of the rods), and tubes allowing the positive electrolyte to contact only the electrolyte zones of the electrochemical rod reactors (the electrolyte zones being on the inside of the rods).

Alternatively, the arrangement comprises tubes allowing hydrogen gas to contact only the hydrogen zones of the electrochemical rod reactors (the hydrogen zones being on the inside of the rods, and a shell allowing the positive electrolyte to contact only the electrolyte zones of the electrochemical rod reactors (the electrolyte zones being on the outside of the rods).

The shell-and-tube arrangement as such is commonly known from a shell-and-tube heat exchanger, for example.

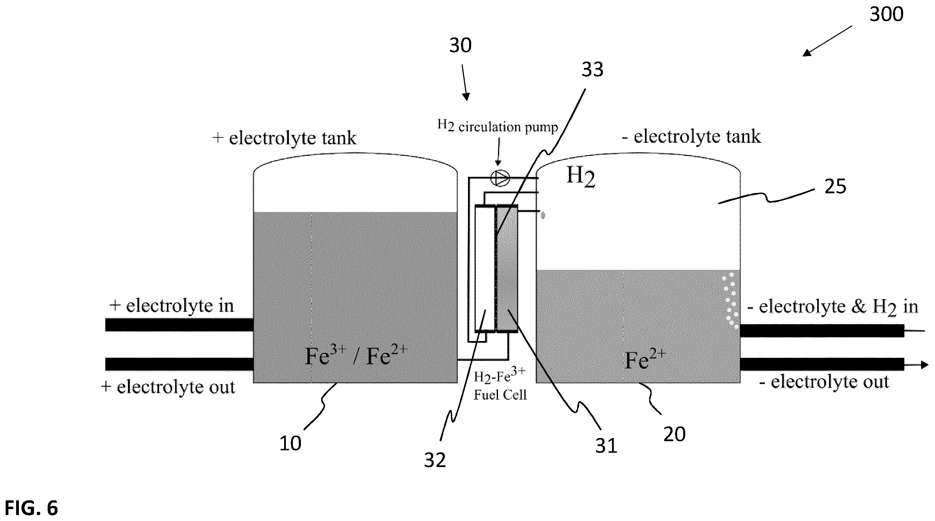

Fig. 6 illustrates a third embodiment of a rebalancing system for a redox flow battery.

The third embodiment 300 comprises a fuel cell as the inter-tank electrochemical rebalancing reactor 30. It comprises an electrolyte zone 31 and an electrolyte zone 32, separated by an ion permeable membrane 33. Positive electrolyte form the positive tank 10 may enter the electrolyte zone 32 in a lower section of the fuel cell 30 at an inlet and may leave the electrolyte zone 32 in an upper section of the fuel cell 30 into the negative tank 20. Hydrogen gas from the head space 25 of the negative tank 20 may enter the hydrogen zone 31 at a lower section of the fuel cell 30 and may leave the hydrogen zone 31 in an upper section of the fuel cell 30 back into the negative tank 20. The flow of hydrogen gas may be supported by a hydrogen circulation pump. Alternatively, the flow direction can be reversed.

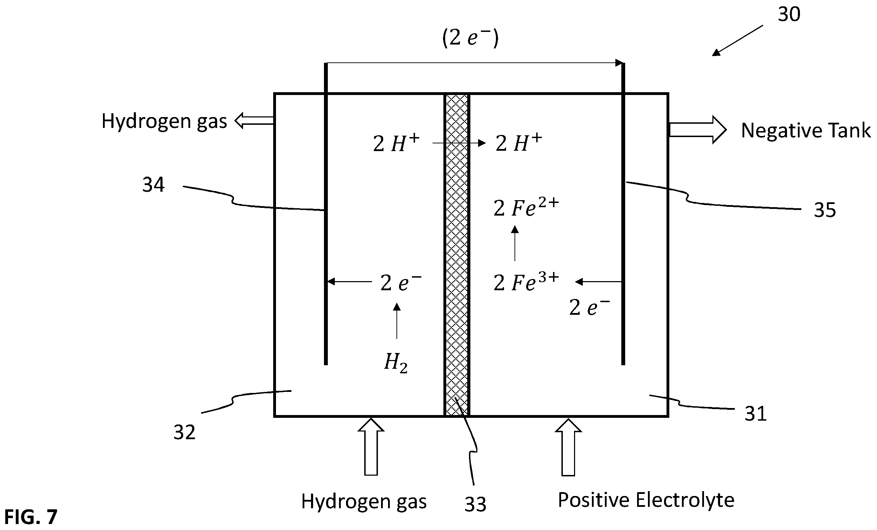

Here, the residence time of positive electrolyte in the electrolyte zone 31 of the fuel cell 30 can be adjusted by an appropriate choice of the height of the fuel cell electrolyte outlet. The fuel cell 30 is further described in detail with reference to Fig. 7 below.

Fig. 7 shows reactions in the fuel cell of the rebalancing system in the third embodiment.

The inter-tank electrochemical rebalancing reactor comprises an iron hydrogen fuel cell 30, comprising a negative half-cell 32 and a positive half-cell 31, wherein the negative half-cell 32 is configured to receive hydrogen gas from the negative electrolyte tank 20, and the positive half-cell 31 is configured for passing through positive electrolyte. The negative half-cell 32 and the positive half-cell 31 are separated by an ion permeable membrane 33.

Further, electrodes 34 and 35 are provided in the negative half-cell 32 and the positive half-cell 31, respectively. The electrodes can be connected, e.g. via a load (not shown) to provide conduction of electrons e⁻ to the positive half-cell 31. The load may be a shunt resistor. The iron hydrogen fuel cell 30 can be used to transfer protons (provided by the H₂ gas) from the negative half-cell 32 to the positive electrolyte passing through the positive half-cell 31. Summarized, the positive electrolyte can be reduced (e.g. Fe³⁺ to Fe²⁺) while H₂ gas is oxidized.

Remaining H₂ gas may be circulated via the headspace 25 of the negative tank 20.

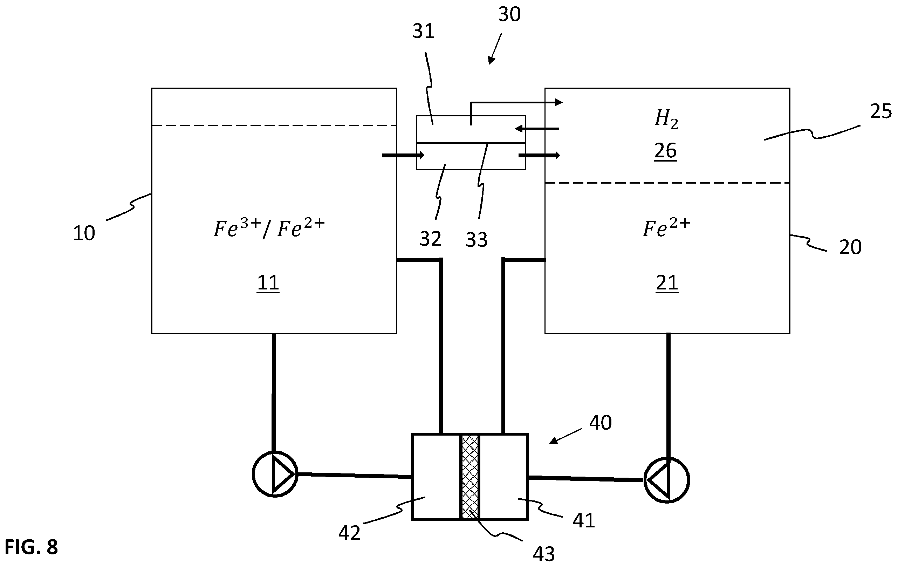

Fig. 8 shows a redox flow battery comprising the rebalancing system according to the invention or one of the developments thereof.

The a redox flow battery comprising the rebalancing system as described above and a battery cell 40 having a positive half-cell 42 through which positive electrolyte 11 is circulated via the positive tank 10, and a negative half-cell 41 through which negative electrolyte 21 is circulated via the negative tank 20.

Although the general outline of the rebalancing system of Figure 1 is illustrated in Figure 8, the rebalancing system may be any one of the other embodiments or any of the developments discussed above.

The embodiments are only exemplary and the full scope of the present invention is defined by the claims.

## Claims

1. A rebalancing system for a redox flow battery, comprising:
a positive tank for containing positive electrolyte;
a negative tank for containing negative electrolyte; and
a rebalancing intertank reactor having an electrolyte zone and a hydrogen zone;
wherein the electrolyte zone and the hydrogen zone are separated from each other by an ion conductive membrane or separator to provide a reduction reaction of positive electrolyte in the electrolyte zone and an oxidation reaction of hydrogen gas in the hydrogen zone;
wherein the electrolyte zone is directly connected to the positive tank and to the negative tank and the hydrogen zone is directly connected to a headspace of the negative tank configured to contain hydrogen gas; and
wherein the geometric arrangement of the positive tank, the rebalancing intertank reactor and the negative tank is configured to allow positive electrolyte to flow from the positive tank through the electrolyte zone to the negative tank due to a hydraulic head difference between the positive electrolyte and the negative electrolyte.

2. The rebalancing system according to claim 1, wherein the rebalancing system is configured to circulate hydrogen gas from the headspace of the negative tank via the hydrogen zone back to the headspace of the negative tank.

3. The rebalancing system according to claim 1 or 2, wherein the rebalancing intertank reactor is configured to transport protons from the hydrogen zone to the electrolyte zone through the ion conductive membrane or separator, and configured to transport electrons from the hydrogen zone to the electrolyte zone to reduce positive electrolyte ions in the electrolyte zone.

4. The rebalancing system according to any one of claims 1 to 3, wherein the rebalancing intertank reactor is configured to transfer reacted electrolyte from the positive tank to the negative tank, in particular iron electrolyte having Fe³⁺ reduced to iron Fe²⁺.

5. The rebalancing system according to any one of claims 1 to 4, wherein the rebalancing intertank reactor comprises a catalyst in the hydrogen zone to allow or enhance the reaction H₂ → 2H⁺ +2e⁻.

6. The rebalancing system according to any one of claims 1 to 5, wherein the rebalancing intertank reactor comprises an electrochemical rod reactor including a proton conductive membrane that physically separates hydrogen gas in the hydrogen zone at an inside or outside of the rod reactor from Fe³⁺-rich positive electrolyte in the electrolyte zone at an outside or inside of the rod reactor, respectively, allowing spontaneous hydrogen oxidation in the hydrogen zone and Fe³⁺ reduction in the electrolyte zone, and wherein the electrochemical rod reactor is configured to strictly separate the positive electrolyte from the hydrogen zone and the hydrogen gas from the electrolyte zone.

7. The rebalancing system according to claim 6, wherein the rebalancing intertank reactor comprises a shell-and-tube rod reactor arrangement having multiple similar electrochemical rod reactors, the arrangement comprising a shell allowing hydrogen gas to contact only the hydrogen zones of the electrochemical rod reactors, and tubes allowing the positive electrolyte to contact only the electrolyte zones of the electrochemical rod reactors.

8. The rebalancing system according to claim 6, wherein the rebalancing intertank reactor comprises a shell-and-tube rod reactor arrangement having multiple similar electrochemical rod reactors, the arrangement comprising tubes allowing hydrogen gas to contact only the hydrogen zones of the electrochemical rod reactors, and a shell allowing the positive electrolyte to contact only the electrolyte zones of the electrochemical rod reactors.

9. The rebalancing system according to any one of claims 6 to 8, wherein a rod geometry, such as length, diameter, membrane area, is sized to assure sufficient residence time for near-complete Fe³⁺ reduction during peak flow.

10. The rebalancing system according to any one of claims 6 to 9, wherein the rod/rods is/are angled upwards in a direction from the positive tank to the negative tank.

11. The rebalancing system according to any one of claims 1 to 5, wherein the rebalancing intertank reactor comprises a fuel cell type reactor in which the ion conductive membrane or separator divides hydrogen in the hydrogen zone from Fe³⁺-rich positive electrolyte in the electrolyte zone.

12. The rebalancing system according to claim 11, wherein the fuel cell type reactor is oriented such that flow from the positive tank naturally enters the electrolyte side of the membrane under gravity or minor head pressure, while hydrogen from the negative tank headspace or from a recirculation line contacts the hydrogen zone, and after passing through the electrolyte zone, Fe²⁺-rich electrolyte flows out to the negative tank.

13. The rebalancing system according to any one of claims 1 to 12, further comprising a tube for transporting negative electrolyte from the negative tank to the positive tank.

14. A redox flow battery comprising the rebalancing system according to any one of claims 1 to 13.
